(19) **Europäisches Patentamt European Patent Office Office européen des brevets**

(11) **EP 3 201 555 B1**

(12) **FASCICULE DE BREVET EUROPEEN**

(45) Date de publication et mention de la délivrance du brevet:
**01.01.2020 Bulletin 2020/01**

(21) Numéro de dépôt: **15788205.1**

(22) Date de dépôt: **01.10.2015**

(51) Int Cl.:
*F28D 20/02* *(2006.01)* *G01F 22/00* *(2006.01)*

(86) Numéro de dépôt international:
**PCT/IB2015/057528**

(87) Numéro de publication internationale:
**WO 2016/051377 (07.04.2016 Gazette 2016/14)**

(54) **SYSTÈME ET PROCÉDÉ DE DÉTERMINATION DU TAUX DE CHARGE D'UN STOCKAGE THERMIQUE LATENT**

SYSTEM UND VERFAHREN ZUR BESTIMMUNG DES LADEZUSTANDES EINES LATENTWÄRMESPEICHERS

SYSTEM AND METHOD FOR DETERMINING THE CHARGE LEVEL OF A LATENT HEAT STORE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2014 FR 1459337**

(43) Date de publication de la demande:
**09.08.2017 Bulletin 2017/32**

(73) Titulaire: **Commissariat à l'Énergie Atomique et aux Énergies Alternatives 75015 Paris (FR)**

(72) Inventeurs:
• **CHAZELLE, Benjamin**
  **F-38400 Saint-martin D'heres (FR)**

• **COUTURIER, Raphaël**
  **F-38360 Sassenage (FR)**
• **MARTINELLI, Matthieu**
  **F-31300 Toulouse (FR)**

(74) Mandataire: **Gevers & Orès Immeuble le Palatin 2 3 Cours du Triangle CS 80165 92939 Paris La Défense Cedex (FR)**

(56) Documents cités:
**EP-A2- 2 482 021 CH-A5- 648 412**

**Description**

L'invention appartient au domaine technique du stockage d'énergie par chaleur latente.

Elle concerne un système et un procédé de détermination du taux de charge d'un moyen de stockage d'énergie par chaleur latente.

On rappelle que de nombreux moyens de stockage d'énergie existent, cette énergie pouvant être stockée notamment sous forme mécanique, chimique ou thermique.

Un stockage d'énergie thermique peut être un stockage thermochimique, un stockage par chaleur sensible ou un stockage par chaleur latente.

A ce jour, les moyens les plus courants permettent un stockage par chaleur sensible, les moyens de stockage thermochimique n'étant pas encore disponibles au niveau industriel.

L'invention s'intéresse aux moyens de stockage par chaleur latente qui utilisent un matériau à changement de phase, solide/liquide ou solide/solide, dont le changement de phase s'accompagne d'une variation volumique.

Ce stockage s'effectue à une température quasi isotherme correspondant à la température de changement de phase.

La quantité de chaleur stockable dépend de la masse du matériau à changement de phase (ou MCP) contenu dans le moyen de stockage ainsi que de la chaleur latente du matériau.

Dans un moyen de stockage par chaleur latente, le matériau à changement de phase solide/liquide devient liquide au moment de la charge et se solidifie lors de la récupération de la chaleur.

Les moyens de stockage avec un MCP solide/liquide sont préférés aux moyens de stockage par chaleur sensible car la quantité de chaleur stockée par unité de volume, ou densité de stockage, est supérieure à celle obtenue avec un système de stockage par chaleur sensible.

Par conséquent, les volumes de stockage et de matériau sont réduits, ce qui diminue le prix du système, et limite les pertes thermiques qui sont proportionnelles à la surface extérieure du réservoir.

De plus, les charges et décharges s'opèrent à température constante. La chaleur stockée est restituée à la même température que lors de son stockage. Il n'y a donc pas de perte de la qualité de la chaleur stockée.

De manière générale, les dispositifs de stockage thermique sont utiles pour lisser la production d'une unité de production d'énergie en lui permettant de fonctionner au plus près de sa puissance optimale.

En effet, lorsque la demande d'énergie est inférieure à la puissance fournie par l'unité de production, les moyens de stockage permettent de stocker l'excédent d'énergie produite. A l'inverse, lorsque la demande est supérieure à la puissance fournie par l'unité de production, l'énergie est déstockée.

En pratique, sont ainsi allongées les périodes de fonctionnement au régime nominal des unités de production.

Ceci permet également de réduire la puissance de chaque unité de production.

De surcroît, ces moyens de stockage facilitent l'utilisation de sources de chaleur renouvelables mais intermittentes, telles que la chaleur fournie par l'énergie solaire.

Ces moyens permettent également la récupération et la valorisation d'énergies fatales, c'est-à-dire d'énergies inutilisables en l'état mais qui pourraient être récupérées et valorisées dans d'autres processus. On peut notamment citer l'énergie thermique provenant d'un centre de données et correspondant à la chaleur qu'il rejette pour refroidir les serveurs qui le composent.

Ces moyens permettent également d'améliorer la flexibilité de l'exploitation en permettant par exemple l'arrêt d'une unité de production pour assurer sa maintenance.

Enfin, ils constituent un moyen de secours pour approvisionner en énergie un réseau, en cas de défaillance d'une unité de production.

Les principaux dispositifs de stockage de chaleur latente actuellement à l'étude sont des dispositifs dits « passifs ». Ces dispositifs sont composés d'un réservoir rempli par le MCP et traversé d'un échangeur comprenant par exemple un faisceau de tubes.

Pour un MCP solide/liquide dont le passage de l'état solide à l'état liquide s'accompagne d'une augmentation de volume, pendant la phase de charge (stockage), un fluide caloporteur traverse le faisceau de tubes, il cède sa chaleur au MCP qui passe de l'état solide à l'état liquide. Pendant la phase de décharge (déstockage), le fluide caloporteur traverse toujours le faisceau de tubes, il prend la chaleur du MCP qui se solidifie.

Il convient de noter qu'un MCP solide/liquide peut également connaître une diminution de volume lorsqu'il passe de l'état solide à l'état liquide. C'est le cas de l'eau qui peut être utilisée comme MCP pour les stockages froids.

Pour un stockage de froid, un MCP se solidifie pendant la phase de charge et se liquéfie pendant la phase de décharge.

Pour un système de stockage passif, le matériau de stockage n'a pas de circulation imposée et le transfert de chaleur se fait plutôt par conduction et par convection naturelle en phase liquide.

Dans le cas spécifique d'un MCP solide/liquide, le MCP se solidifie et s'accroche fortement aux surfaces d'échange (tubes ou plaques), une couche de MCP solide d'épaisseur croissante recouvre les parois de l'échangeur et les isole thermiquement. La création de cette « résistance thermique » se traduit par une diminution rapide de la puissance échangée entre le fluide caloporteur et le MCP.

Pour augmenter le transfert thermique avec le MCP, plusieurs solutions sont mises en œuvre. On peut par exemple utiliser un échangeur avec des tubes ailettés ou ajouter au MCP un matériau divisé qui augmente sa conductivité thermique (mousse métallique, particules ou fibres de carbone).

L'intérêt de ces systèmes dit passifs est que le fluide caloporteur, souvent sous pression, est confiné à l'intérieur du faisceau de tubes, ainsi la cuve n'est pas sous pression et elle est donc de conception simple.

Dans la suite de la description, il sera fait référence à des dispositifs de stockage de chaleur latente du type passif, ces moyens étant prometteurs pour les réseaux de chaleur.

Cependant, l'invention n'est pas limitée à ce type de stockage par chaleur latente.

On comprend qu'un dispositif de stockage thermique ne peut être efficacement utilisé, notamment par le gestionnaire d'un réseau de chaleur, que dans la mesure où l'énergie thermique disponible dans le dispositif de stockage lui est connue.

En particulier, il est essentiel de pouvoir déterminer si le dispositif de stockage doit être chargé ou déchargé et dans quelle mesure cette charge ou cette décharge peut être réalisée.

De plus, connaître l'énergie thermique disponible permet de décider de l'achat ou de la vente de l'énergie thermique sur un marché de la chaleur.

Or, la détermination de l'énergie thermique disponible dans un stockage thermique par chaleur latente est problématique car la chaleur est stockée à température constante.

De ce fait, contrairement à un dispositif de stockage par chaleur sensible, il n'est pas possible de la mesurer à l'aide de capteurs de température.

Dans un dispositif de stockage par chaleur latente, la part d'énergie thermique utile encore disponible dans le dispositif correspond au produit de la masse du matériau à changement de phase qui se présente sous forme liquide et de l'enthalpie de changement d'état massique.

En pratique, il est souvent fait référence au taux de charge qui correspond à la part d'énergie thermique utile encore disponible, divisé par l'énergie thermique totale qui peut être stockée dans le dispositif.

Ainsi en simplifiant l'expression du taux de charge par suppression de l'enthalpie de changement d'état massique, le taux de charge répond à la relation suivante (1):

$$Tx_{charge} = \frac{m_{MCP/liquide}}{m_{MCP/totale}} \qquad (1)$$

où $Tx_{charge}$ est le taux de charge,

$m_{MCP/liquide}$ est la masse du MCP sous forme liquide, et

$m_{MCP/totale}$ est la masse totale de MCP contenu dans le dispositif de stockage.

La masse totale de MCP est connue puisqu'il s'agit d'un des paramètres de conception et de dimensionnement du système de stockage d'énergie.

Par ailleurs, la masse liquide de MCP peut être facilement déterminée à partir du volume occupé par ce liquide et de la densité de ce même liquide.

Plusieurs moyens ont déjà été proposés pour évaluer le volume occupé par le MCP sous forme liquide.

Ainsi, il a été envisagé de déterminer le volume occupé par le MCP sous forme liquide en déterminant le positionnement du front liquide/solide dans le dispositif de stockage.

Il a été envisagé de disposer des capteurs à différentes hauteurs du réservoir, ces capteurs permettant d'indiquer la présence d'une phase liquide ou solide.

Cette solution a fait l'objet d'essais ("Entwicklung eines Messverfahrens zur Bestimmung des thermischen Beladungsgrades von PCM-Paraffin-Speichem", Brandenburgische Technische Universität Cottbus, Dr. Andreas Donath, Prof. Monika Bauer, 03013 Cottbus, August 2008).

La conclusion de ces essais est que, ni les capteurs de température, ni les capteurs mesurant la différence de conductivité du milieu ne sont adaptés.

En effet, le changement de phase s'opère sans changement de température.

De plus, les capteurs mesurant la différence de conductivité du milieu ne sont pas assez sensibles.

Les capteurs évaluant les propriétés optiques ont été retenus comme le meilleur moyen d'évaluer l'état du MCP en un point.

Cependant, ces essais ont été réalisés avec un simple panneau rempli de MCP et destiné à recouvrir les murs d'un bâtiment pour en augmenter l'inertie.

Dans notre cas, cette détermination est malaisée car le front liquide/solide est complexe.

Ceci résulte en premier lieu de l'architecture des systèmes de stockage par chaleur latente qui comportent un réservoir rempli par le MCP et traversé par un faisceau de tubes. Ceci résulte également de la propension du MCP à s'accrocher aux surfaces d'échange déterminées par les tubes, lorsqu'il se solidifie.

Ainsi, avec un système de stockage comportant un réservoir avec un échangeur noyé dans une masse de MCP, il convient d'utiliser un nombre important de capteurs, ce qui engendre de nombreux inconvénients.

Tout d'abord, la maintenance est difficile car les capteurs, noyés dans le MCP, ne peuvent pas être retirés aisément.

Il convient également de prévoir des moyens d'acquisition importants, du fait du nombre important de capteurs.

Enfin, ce nombre important de capteurs a un impact sur les mesures réalisées. En effet, les capteurs modifient l'architecture interne du réservoir et donc son comportement thermique.

On peut également citer le document WO 2012/156343 qui propose de déterminer la fraction liquide/solide par l'intermédiaire d'ondes radars.

Cependant, cette technique n'est également adaptée à un simple panneau rempli de MCP, sans échangeur noyé.

Elle ne convient pas à un réservoir comportant un échangeur noyé. En effet, dans ce cas, la présence importante de métal engendre des phénomènes de réverbération et d'absorption des ondes de telle sorte que les données sont inexploitables.

Il a également été proposé de déterminer le volume de MCP sous forme liquide par la mesure de la pression du ciel du réservoir.

On peut ainsi citer l'article "Development of sensors for measuring the enthalpy of PCM storage systems", Gerald Steinmaurer, Michael Krupa, Patrick Kefer, Energy Procedia 48, pages 440-446, 2014.

Le ciel du réservoir est défini comme le volume mort situé dans sa partie haute.

Il est généralement composé d'un gaz inerte afin d'éviter d'éventuelles interactions entre le MCP et l'air qui pourraient dégrader les propriétés du MCP.

Les MCP utilisés présentent une forte expansion volumique lors de leur fusion (environ 15%). Une élévation de pression a donc lieu dans le ciel entre l'état complètement déchargé du stockage (MCP entièrement solide) et l'état chargé (MCP entièrement liquide). Il est ainsi possible de corréler la pression mesurée dans le ciel à la fraction de liquide formée et donc de déterminer le taux de charge.

En pratique, cette méthode basée sur la mesure de la pression du ciel du réservoir ne permet pas d'obtenir des mesures fiables.

Premièrement, afin de ne pas surdimensionner la cuve, la taille du ciel doit être minimisée. A l'inverse, pour éviter une élévation de pression trop importante, la taille du ciel doit être assez importante. Dans ces deux derniers cas, la mesure de variation de pression apparait désavantageuse : soit le ciel de la cuve est surdimensionné, ce qui augmente le prix de fabrication de la cuve et ses pertes thermiques, soit on fait de la cuve un appareil sous pression, ce qui augmente le coût, les contraintes règlementaires et la dangerosité.

Deuxièmement, elle nécessite une parfaite étanchéité du volume de stockage afin de pouvoir observer la variation de pression. Rendre un réservoir complètement hermétique est difficile et coûteux du fait que les soudures ou les assemblages mécaniques doivent être d'une très bonne qualité. De plus, ces liaisons mécaniques ne resteront pas hermétiques dans le temps.

Troisièmement, la dilation du gaz sous l'effet de la température doit être prise en compte, on doit donc estimer l'évolution de la température du ciel.

Le ciel gazeux présente une importante stratification des températures qui est due à la différence de températures entre l'extérieur et l'intérieur du réservoir, combinée à la faible conductivité thermique du gaz. Il est ainsi difficile d'estimer sa température moyenne.

Finalement, quantifier l'influence de la dilatation du gaz sur l'élévation de pression paraît compliqué et nécessiterait l'ajout d'un nombre important de capteurs de température.

Le document CH 648 412 propose une autre solution pour déterminer le taux de charge d'un moyen de stockage d'énergie par chaleur latente, mettant en oeuvre un matériau à changement de phase (MCP). A cet effet, il met à profit un fluide de mesure et des fins de course qui permettent de déterminer si le MCP est chargé ou déchargé. La solution proposée dans ce document ne permet toutefois pas de déterminer le taux de charge du MCP, quel que soit l'état de charge du MCP.

L'invention a pour objet de pallier ces inconvénients en proposant un système et un procédé permettant de déterminer de façon aisée et fiable le taux de charge d'un moyen de stockage d'énergie par chaleur latente.

En particulier, l'invention a pour objet de proposer un tel système et procédé permettant de déterminer ce taux de charge quel que soit l'état de charge du moyen de stockage d'énergie par chaleur latente.

Ce système et ce procédé s'appliquent à un moyen de stockage comprenant un réservoir partiellement rempli d'un matériau à changement de phase dont le changement de phase s'accompagne d'une variation volumique avec un échangeur thermique noyé dans ledit matériau, ce moyen de stockage étant dans un état complètement déchargé lorsque le matériau à changement de phase est sensiblement totalement dans un premier état et dans un état complètement chargé, lorsque le matériau à changement de phase est sensiblement totalement dans un deuxième état.

Selon l'invention, le système comprend :

- un fluide de mesure destiné à être versé dans le réservoir du moyen de stockage,
- des moyens de mesure de la hauteur du fluide dans le réservoir, et
- des moyens pour calculer le taux de charge du moyen de stockage à un moment déterminé de son fonctionnement, en fonction de la différence entre la hauteur du fluide présent dans le réservoir lorsque le moyen de stockage est complètement déchargé et la hauteur du fluide audit moment déterminé.

Dans une première variante, le matériau à changement de phase est sous forme solide dans ledit premier état et dans ledit deuxième état.

Dans une deuxième variante, le matériau à changement de phase est sous forme solide dans ledit premier état ou dans ledit deuxième état et sous forme liquide dans ledit premier état ou dans ledit deuxième état et le fluide de mesure est compatible et non miscible avec le matériau à changement de phase.

Le fluide comporte avantageusement une densité inférieure à celle du matériau à changement de phase sous forme liquide.

Le système comporte une quantité suffisante de fluide de mesure de sorte que la surface libre du fluide de mesure soit plane quel que soit l'état de charge de celui-ci.

Ainsi, à titre indicatif, le volume dudit fluide de mesure est, de préférence, au moins égal à la variation de volume du matériau à changement de phase lors de sa fusion.

Les moyens de mesure peuvent avantageusement consister en un télémètre laser, un capteur de niveau optique ou encore un flotteur instrumenté.

L'invention concerne également un procédé de détermination du taux de charge d'un moyen de stockage d'énergie par chaleur latente.

Selon l'invention, le procédé comprend les étapes suivantes :

(a) remplir le réservoir du moyen de stockage avec un fluide de mesure,
(b) réaliser une décharge complète du moyen de stockage
(c) mesurer la hauteur du fluide dans le réservoir lorsque le moyen de stockage est dans cet état complètement déchargé,
(d) mesurer la hauteur du fluide dans le réservoir à un moment déterminé du fonctionnement du moyen de stockage, et
(e) calculer le taux de charge audit moment déterminé en fonction de la différence entre les hauteurs du fluide mesurées aux étapes (c) et (d).

Dans une première variante, le matériau à changement de phase est sous forme solide dans ledit premier état et dans ledit deuxième état.

Dans une deuxième variante, le matériau à changement de phase est sous forme solide dans ledit premier état ou dans ledit deuxième état et sous forme liquide dans ledit premier état ou dans ledit deuxième état.

De préférence, le fluide de mesure utilisé est alors compatible et non miscible avec le matériau à changement de phase et sa densité est inférieure à celle du matériau à changement de phase sous forme liquide.

Le volume du fluide de mesure versé dans le réservoir est avantageusement choisi de telle sorte que le fluide de mesure présente une surface libre plane, quel que soit l'état de charge de moyen de stockage.

Ainsi, à titre indicatif, le volume du fluide de mesure versé dans le réservoir du moyen de stockage est au moins égal à la variation de volume du matériau à changement de phase lors de sa fusion.

De préférence, le réservoir est rempli du matériau à changement de phase, en phase liquide, avant l'étape (a).

L'invention sera mieux comprise et d'autres buts, avantages et caractéristiques de celle-ci apparaîtront plus clairement à la lecture de la description qui suit et qui est faite au regard des dessins annexés sur lesquels :

- la figure 1 est une vue schématique en coupe longitudinale d'un moyen de stockage par chaleur latente équipé du système selon l'invention, le réservoir étant dans un état totalement déchargé, et
- la figure 2 est une vue similaire à la figure 1, dans laquelle le réservoir est dans un état partiellement chargé.

Les éléments communs aux deux figures seront désignés par les mêmes références.

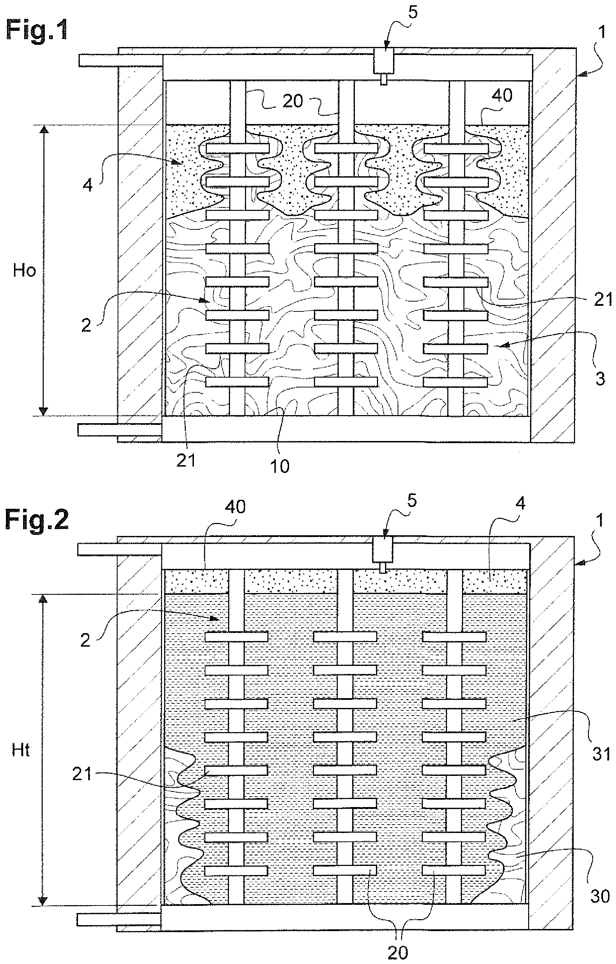

La figure 1 illustre un moyen de stockage comportant un réservoir 1, un échangeur 2 ainsi qu'une certaine quantité d'un matériau à changement de phase 3. Il s'agit ici d'un matériau à changement de phase solide/liquide dont le passage de l'état solide à l'état liquide s'accompagne d'une augmentation volumique.

L'échangeur 2 comporte plusieurs tubes 20, dans lesquels circule le fluide de transfert et des plaques ou ailettes 21 réparties le long de ces tubes 20.

Dans l'exemple illustré sur la figure 1, l'échangeur comporte plusieurs rangées de trois tubes, ces rangées étant sensiblement parallèles et les tubes étant alignés d'une rangée à l'autre. Le nombre de rangées et le nombre de tubes par rangée sont définis lors du dimensionnement du moyen de stockage.

D'autres dispositions des tubes peuvent être envisagées. Ainsi, les tubes peuvent être décalés d'une rangée à l'autre pour réaliser un agencement en quinconce.

Ce moyen de stockage est équipé du système de détermination de l'énergie thermique instantanée selon l'invention.

Il comprend un fluide de mesure 4 qui a été versé dans le réservoir 1, ainsi qu'un capteur de niveau 5 qui est ici disposé dans la partie supérieure du réservoir 1.

A la figure 1, le moyen de stockage est illustré dans un état totalement déchargé. En d'autres termes, le matériau à changement de phase est sensiblement totalement dans un état solide.

De préférence, le volume du fluide de mesure est choisi de telle sorte qu'il recouvre complètement les ailettes 21 de l'échangeur, quel que soit l'état de charge du moyen de stockage.

De cette façon, le fluide de mesure 4 présente une surface libre 40 qui est plane.

On dénomme $H_0$, la hauteur du fluide de mesure dans le réservoir, c'est-à-dire la distance entre la surface libre 40 du fluide de mesure et le fond 10 du réservoir.

Cette hauteur $H_0$ correspond à la condition initiale de fonctionnement du moyen de stockage par chaleur latente.

Le fluide de mesure doit être compatible et non miscible avec le MCP.

La compatibilité entre le fluide de mesure et le MCP se traduit par le fait que ces deux produits ne doivent pas réagir chimiquement entre eux. Concernant la non-miscibilité, il faut que le mélange soit hétérogène et qu'il n'y ait pas d'émulsion à l'interface. C'est pourquoi le fluide de mesure sera, de préférence, considérablement moins dense que le MCP liquide. En effet, cette différence de densité évite les phénomènes de mélange pouvant conduire à une émulsion. Le fluide de mesure restera donc en partie haute du réservoir.

De plus, le fluide de mesure étant dans la cuve, il est amené à être chauffé. Il est donc nécessaire que le fluide ne se détériore pas avec la température, ni qu'il ne se vaporise. La température d'évaporation doit donc être judicieusement choisie en fonction des conditions opératoires.

Par ailleurs, le fluide de mesure va pouvoir emmagasiner et céder de l'énergie. De ce fait il est intéressant de sélectionner un fluide avec une capacité thermique élevée, afin d'optimiser la densité énergétique du système de stockage.

Enfin, il est souhaitable que le fluide de mesure ne réagisse pas chimiquement avec les autres matériaux en présence (tube, ailettes), ni qu'il s'oxyde au contact de l'air.

De préférence, lorsque le fluide de mesure est versé dans le réservoir 1, le MCP est présent sous forme liquide dans le réservoir.

Lorsque le fluide de mesure a été versé, une décharge complète du moyen de stockage est réalisée, de telle sorte que le MCP est sensiblement totalement dans un état solide, comme illustré sur la figure 1. Il est préférable de procéder ainsi pour éviter la présence de cavités d'air dans le MCP sous forme solide, lors de la mesure de Ho correspondant à la condition initiale de fonctionnement. En effet, la présence de ces cavités apporterait une erreur sur cette mesure.

Cette étape de calibrage peut être réalisée périodiquement au cours de la mise en œuvre du procédé.

Elle a pour objet d'initialiser le fonctionnement du système à la première mise en fonctionnement ou après la survenance d'un événement ayant pu modifier la structure du moyen de stockage, par exemple la maintenance d'un insert ou la vérification des soudures internes. Le but est de disposer d'une mesure la plus précise tout au long de la vie du système.

Le capteur 5 permet de mesurer le niveau de la surface libre 40 du fluide 4 et donc, dans l'état déchargé du moyen de stockage, la hauteur $H_0$.

Ce capteur 5 peut notamment être un télémètre laser. On peut par exemple citer un capteur de distance courte portée commercialisé par la société SICK, dont la résolution est comprise entre $2\mu$m et $90\mu$m avec une plage de mesure allant jusqu'à 1 m.

On peut également se référer au télémètre laser commercialisé par la société Parallax dont la plage de mesure est comprise entre 15 cm et 122 cm, avec une précision de 3%.

D'autres exemples de capteurs pourraient être utilisés, par exemple un capteur de niveau optique ou encore un flotteur instrumenté.

Au cours du fonctionnement du moyen de stockage par chaleur latente, une variation du niveau de la surface libre du fluide de mesure peut être causée par trois phénomènes :

- la hausse ou la baisse de la température du fluide de mesure entraînant un changement de son volume,
- la hausse ou la baisse de la température du MCP liquide entrainant un changement de son volume,

- la fusion ou la solidification du MCP.

Les deux premiers phénomènes reposent sur la variation avec la température de la densité de ces deux liquides. Ils peuvent être quantifiés grâce à des mesures de température peu nombreuses, voire négligés du fait de la quasi iso-température du stockage. Effectivement, les stockages latents ne réalisent qu'une surchauffe de quelques degrés Celsius au-dessus de la température de fusion du MCP, ce qui représente une expansion faible du MCP liquide. Pour plus de clarté et par simplification, ces deux phénomènes ne seront pas pris en compte dans les exemples de calculs.

Le dernier phénomène est celui que l'on veut quantifier. Il va être ensuite montré qu'il est possible d'établir une loi fournissant l'état de charge en fonction du niveau de fluide de mesure.

La figure 2 illustre le moyen de stockage dans un état partiellement chargé.

Elle montre qu'une partie du MCP sous forme solide a été transformée en liquide. La partie du MCP sous forme solide est identifiée par la référence 30 et la partie du MCP sous forme liquide est identifiée par la référence 31.

Le capteur 5 permet de déterminer la hauteur de la surface libre du liquide présent dans le réservoir ou encore la distance entre la surface libre 40 du fluide de mesure 4 et le fond 10 de la cuve à un instant t déterminé du fonctionnement du moyen de stockage. Cette distance est identifiée par la référence $H_t$.

Les figures 1 et 2 montrent que, dans l'exemple illustré, un espace libre subsiste entre la surface libre 40 du fluide de mesure et la partie supérieure du réservoir.

Comme indiqué précédemment, ce volume mort est communément dénommé « ciel du réservoir ».

Cependant, l'invention n'est pas limitée à ce mode de réalisation et le réservoir pourrait ne pas comporter de volume mort.

Par ailleurs, le réservoir peut être conçu pour être hermétique.

Cependant, l'invention n'est pas limitée à ce mode de réalisation et le réservoir pourrait être en communication avec le milieu extérieur au moyen d'un évent prévu dans la partie haute.

Ce mode de réalisation permet d'éviter une montée en pression à l'intérieur du réservoir.

L'augmentation du volume du fluide de mesure ainsi que de celui du MCP liquide sous l'effet de la charge (dilatation thermique) est faible. En revanche, ces augmentations volumiques peuvent être prises en compte grâce à une mesure de température et intégrées dans les expressions qui suivent, mais pour plus de clarté, ces termes ne sont pas mentionnés. En revanche, le volume occupé par le MCP sous forme liquide est supérieur au volume correspondant du MCP sous forme solide, de telle sorte que la hauteur $H_t$ est supérieure à la hauteur $H_0$.

Il est possible de déterminer la masse du MCP sous forme liquide de la façon suivante.

Tout d'abord, le coefficient d'expansion du MCP lors de sa transition solide-liquide s'obtient par la relation (2) :

$$\left( 1 - \frac{\rho_{MCPliquide}}{\rho_{MCPsolide}} \right) \quad (2)$$

où :

$\rho_{MCPliquide}$ est la densité volumique du MCP liquide (exprimée en Kg/m$^3$) et
$\rho_{MCPsolide}$ est la densité volumique du MCP solide (exprimée en Kg/m$^3$).

On peut donc exprimer le volume supplémentaire occupé par le volume du MCP sous forme liquide en multipliant ce volume par son coefficient d'expansion :

$$V_{expansion} = V_{MCP/liquide} \times \left( 1 - \frac{\rho_{MCP\,liquide}}{\rho_{MCP\,solide}} \right) \quad (3)$$

où :

$V_{expansion}$ est l'augmentation volumique qui a lieu au cours d'une charge (exprimée en m$^3$), et
$V_{MCP/liquide}$ est le volume occupé par le MCP liquide (exprimé en m$^3$).

Le volume supplémentaire peut aussi être exprimé par la relation (4) qui fait intervenir la mesure du niveau du fluide dans le réservoir :

$$V_{expansion} = \left[\left(H_t - H_0\right) \times S_{moyenne}\right] \quad (4)$$

où :

$H_t$ est la hauteur de la surface libre du fluide au temps t du fonctionnement du moyen de stockage, le moyen de stockage étant partiellement chargé (exprimée en m),
$H_0$ est la hauteur de la surface libre du fluide lorsque le moyen de stockage est dans un état totalement déchargé (exprimée en m) et
$S_{moyenne}$ est la section libre du réservoir prenant en compte la présence de l'échangeur (exprimée en m$^2$).

En combinant les relations (3) et (4), on obtient la relation (5) :

$$V_{MCP/liquide} \times \left(1 - \frac{\rho_{MCP\ liquide}}{\rho_{MCP\ solide}}\right) = \left[\left(H_t - H_0\right) \times S_{moyenne}\right] \quad (5)$$

Ainsi, le volume occupé par le MCP liquide est défini par la relation (6) :

$$V_{MCP/liquide} = \frac{\left[\left(H_t - H_0\right) \times S_{moyenne}\right]}{\left(1 - \frac{\rho_{MCP\ liquide}}{\rho_{MCP\ solide}}\right)} \quad (6)$$

Compte tenu de la relation (1) définie précédemment, le taux de charge peut être exprimé par la relation (7) :

$$Tx_{charge} = \frac{V_{MCP/liquide} \times \rho_{MCP\ liquide}}{m_{MCP/totale}} \quad (7)$$

où

$V_{MCP/liquide}$ est le volume occupé par le MCP liquide (exprimé en m$^3$),
$\rho_{MCPsolide}$ est la densité volumique du MCP solide (exprimée en Kg/m$^3$), et
$m_{MCP/totale}$ est la masse totale de MCP contenue dans le dispositif de stockage (exprimée en Kg).

Compte tenu de la relation (6), le taux de charge peut donc également être exprimé sous la forme de la relation (8) :

$$Tx_{charge} = \frac{\left(H_t - H_0\right) \times S_{moyenne} \times \rho_{MCP\ liquide}}{\left(1 - \frac{\rho_{MCP\ liquide}}{\rho_{MCP\ solide}}\right) \times m_{MCP/totale}} \quad (8)$$

Ainsi, le système selon l'invention permet de déterminer la masse de MCP liquide présente dans le réservoir et donc, la part d'énergie thermique utile encore disponible ainsi que le taux de charge à un instant t du fonctionnement du moyen de stockage, en permettant la mesure de l'augmentation de volume causée par l'expansion du MCP lors de sa fusion.

On comprend que le volume de MCP liquide comme le taux de charge sont directement liés à la hauteur mesurée de la surface libre du fluide de mesure. Il suffit de relier le capteur à une centrale d'acquisition ou une carte Arduino par exemple, pour pouvoir récupérer et traiter l'information. Une télétransmission des données par ADSL ou GPRS au gestionnaire du réseau permet le contrôle de l'état de charge et l'optimisation du réseau en fonction des différents moyens de stockage équipés du système selon l'invention.

On peut également noter que le système selon l'invention permet de révéler certains dysfonctionnements, en détectant un changement de niveau anormal du fluide de mesure ou un changement trop important du niveau (niveau du fluide qui descend en dessous du niveau bas (Ho), ou niveau du fluide qui dépasse le niveau maximum).

Ainsi, une hausse trop rapide de la limite normale du niveau ou dépassant cette limite normale peut indiquer une fuite de fluide caloporteur depuis l'intérieur des tubes de l'échangeur noyé vers le milieu de stockage.

Par ailleurs, une baisse trop rapide et/ou au-delà de la limite basse pourrait indiquer une fuite du réservoir contenant le MCP, lequel s'écoulerait vers l'extérieur du réservoir.

Ce moyen de détection de fuites est intéressant car il peut arriver qu'une fuite soit difficilement détectable.

La description qui précède concerne un moyen de stockage dont le réservoir est partiellement rempli d'un MCP solide/liquide dont le passage de l'état solide à l'état liquide s'accompagne d'une augmentation volumique.

L'invention n'est cependant pas limitée à cet exemple de réalisation.

Ainsi, le MCP contenu dans le réservoir pourrait être un MCP solide/liquide dont le passage de l'état solide à l'état liquide s'accompagne d'une diminution volumique. C'est notamment le cas lorsque le MCP est de l'eau, le moyen du stockage étant un stockage froid.

Par ailleurs, le MCP contenu dans le réservoir pourrait également être un MCP solide/solide, dont le passage d'un premier état solide à un deuxième état solide s'accompagne d'une variation de volume.

On peut à cet égard citer comme exemple de MCP de ce type, le Pentaerythritol.

Les MCP solide/solide peuvent être utilisés dans le cadre de l'invention car leur variation de volume lors du passage d'un état solide à l'autre est suffisamment importante.

De façon générale, la variation de volume d'un MCP solide/solide est comprise entre environ 5 et 10%. Elle est d'environ 10% pour le Pentaerythritol. Elle est inférieure à celle qui est constatée pour les MCP solide/liquide, comme les paraffines pour lesquelles la variation volumique est de l'ordre de 15%. Elle permet néanmoins la mise en œuvre du procédé selon l'invention.

On comprend que le système selon l'invention peut trouver de nombreuses applications. On peut notamment l'utiliser en association avec des moyens de stockage pour centrale solaire à concentration à génération directe de vapeur, pour des réseaux de chaleur urbains et pour des systèmes de récupération de chaleurs fatales dans les usines d'incinération des ordures ménagères.

On va maintenant décrire un exemple de réalisation d'un système selon l'invention permettant la détermination de l'énergie thermique utile disponible ou encore le taux de charge d'un moyen de stockage latent destiné à une sous-station d'un réseau de chaleur.

Les sous-stations sont les points de livraison de la chaleur à l'abonné. Elles permettent le transfert de chaleur entre le réseau de distribution primaire et le réseau secondaire qui dessert les usagers.

Sur un réseau de chaleur, les pics de consommation représentent typiquement 30% de la consommation thermique d'une journée de chauffe typique. Ils sont assurés par la mise en marche de chaufferies fonctionnant au gaz ou au fioul lourd, qui sont polluantes et avec un coût de l'énergie élevé.

On peut alors envisager le remplacement de ces chaufferies par une production solaire thermique locale. Cette production sera stockée dans un stockage par chaleur latente et restituée pendant les pics de consommation. Ce stockage peut aussi être chargé par la récupération d'énergies fatales locales (data center, usine d'incinération des ordures ménagères,...). Le choix d'un stockage latent est évident du fait de la faible place disponible en milieu urbain. En effet, grâce à leur compacité, ces stockages pourront être installés en toiture, en sous-sol, sur la voie publique ou encore en partie basse de la double peau d'un bâtiment.

On peut considérer qu'une sous-station typique présente les caractéristiques suivantes :

- 75 logements desservis,
- 750 $MWh_{th}$ fournis sur l'année,
- 150 jours de chauffe à puissance importante
- alimentation de la sous-station en eau surchauffée (jusqu'à 180°C, 20 bar) qui constitue le fluide circulant dans l'échangeur du moyen de stockage.

Le réservoir du moyen de stockage par chaleur latente est défini de la façon suivante, compte tenu des technologies actuelles :

- l'échangeur placé dans le réservoir représente environ 20% du volume intérieur du réservoir,
- la masse de MCP représente environ 70% du volume intérieur du réservoir.

On peut notamment choisir, comme MCP, un polyol, par exemple de l'érythritol qui présente les caractéristiques suivantes :

- température de fusion : 120°C,
- chaleur latente de fusion-solidification : 340 kj/kg,
- densité solide : 1480 kg/m$^3$,
- densité liquide : 1300 kg/m$^3$.

Le système selon l'invention comporte un fluide de mesure qui est une huile minérale raffinée commercialisée par la société Shell sous la dénomination Shell heat transfer oil S2X.
Sa densité à 15°C est de 865 kg/m$^3$.
Par ailleurs, cette huile est non miscible et compatible avec l'érythritol, comme le confirme le document "Eperimental study on the direct/indirect contact energy storage container in mobilized thermal energy system (M-TES)", Applied Energy 119 (2014) 181-189.
Le volume du fluide de mesure répond à la relation (9) :

$$V_{Fluide\ de\ mesure} = V_{MCP\frac{totale}{liquide}} \times \left(1 - \frac{\rho_{MCP\ liquide}}{\rho_{MCP\ solide}}\right) \qquad (9)$$

où :

$V_{Fluide\ de\ mesure}$ est le volume du fluide de mesure,

$V_{MCP\frac{totale}{liquide}}$ est le volume total de MCP dans son état liquide, et

$\left(1 - \frac{\rho_{MCP\ liquide}}{\rho_{MCP\ solide}}\right)$ est le coefficient d'expansion du MCP lors de sa transition solide-liquide correspondant à la relation (2).

Dans l'exemple défini ci-dessus, la relation (9) s'exprime de la façon suivante :

$$V_{Fluide\ de\ mesure} = 12.3 * \left(1 - \frac{1300}{1480}\right)$$

soit un volume de fluide de mesure égal à 1,5 m$^3$.
Bien entendu, l'invention n'est pas limitée à cet exemple de réalisation et d'autres couples MCP/fluide de mesure peuvent être utilisés.
Ainsi, il est possible d'utiliser de l'eau comme fluide de mesure avec des paraffines comme MCP, une huile thermique (polychlorobiphényle) comme fluide de mesure avec un hydrate de sel comme MCP, ou encore une huile minérale raffinée avec un polyol.
A titre d'exemple, l'huile thermique du type polychlorobiphényle peut être l'huile thermique commercialisée sous la dénomination Therminol VLT par la société Eastman Chemical Company.
Dans la mesure où la plupart des MCP ont une température de fusion comprise dans l'intervalle de température 0 à 175°C, l'huile Therminol VLT est moins dense que les MCP dans leur état liquide. De plus, les huiles sont la plupart du temps non miscibles et compatibles avec les autres fluides.
Ainsi, le système et le procédé selon l'invention permettent de mesurer l'énergie thermique instantanée ou encore le taux de charge de la majorité des moyens de stockage par énergie latente passifs, sans modification notable de ces moyens de stockage.
Par ailleurs, ce système et ce procédé permettent les déterminations instantanées par une simple mesure de

niveau et sans connaître l'historique d'exploitation du moyen de stockage et sans influence des conditions extérieures. Contrairement à ce qui a été présenté dans l'art antérieur, les pertes thermiques n'ont pas à être quantifiées, elles sont mesurables directement par suivi du niveau du fluide dans le réservoir.

L'invention convient bien à des moyens de stockage de chaleur où l'instrumentation doit être limitée pour des raisons de coût.

De plus, la détermination de l'énergie thermique instantanée ou du taux de charge du moyen de stockage par chaleur latente est réalisée de manière efficace, fiable et précise.

Le système et le procédé selon l'invention peuvent être utilisés quelle que soit la technologie utilisée pour améliorer les transferts thermiques, que ce soient des ailettes, des matrices, des particules ou des mousses.

Enfin, l'invention permet de s'affranchir de l'utilisation d'un ciel inerte. Effectivement, le fluide de mesure crée une barrière entre le MCP et le ciel du réservoir. L'utilisation d'un ciel composé d'un gaz inerte afin d'éviter d'éventuelles interactions entre le MCP et l'air qui pourraient dégrader les propriétés du MCP n'est donc pas requise. De plus, le réservoir n'est pas nécessairement hermétique et sous pression.

## Revendications

1.  Système de détermination du taux de charge d'un moyen de stockage d'énergie par chaleur latente, ledit moyen de stockage comprenant un réservoir partiellement rempli d'un matériau à changement de phase dont le changement de phase s'accompagne d'une variation volumique avec un échangeur thermique noyé dans ledit matériau, ce moyen de stockage étant dans un état complètement déchargé lorsque le matériau à changement de phase est sensiblement totalement dans un premier état et dans un état complètement chargé, lorsque le matériau à changement de phase est sensiblement totalement dans un deuxième état, comprenant:

    - un fluide de mesure (4) destiné à être versé dans le réservoir (1) du moyen de stockage, et **caractérisé en ce que** le système comprend
    - des moyens de mesure (5) de la hauteur du fluide de mesure dans le réservoir, et
    - des moyens pour calculer le taux de charge du moyen de stockage à un moment déterminé de son fonctionnement, en fonction de la différence entre la hauteur du fluide présent dans le réservoir lorsque le moyen de stockage est complètement déchargé et la hauteur du fluide audit moment déterminé.

2.  Système selon la revendication 1, **caractérisé en ce que** le matériau à changement de phase est sous forme solide dans ledit premier état et dans ledit deuxième état.

3.  Système selon la revendication 1, dans lequel le matériau à changement de phase est sous forme solide dans ledit premier état ou dans ledit deuxième état et sous forme liquide dans ledit premier état ou dans ledit deuxième état, **caractérisé en ce que** le fluide de mesure est compatible et non miscible avec le matériau à changement de phase.

4.  Système selon la revendication 3, **caractérisé en ce que** le fluide de mesure comporte une densité inférieure à celle du matériau à changement de phase sous forme liquide.

5.  Système selon l'une des revendications 1 à 4, **caractérisé en ce que** le volume dudit fluide de mesure est choisi de telle sorte que le fluide de mesure présente une surface libre (40) plane quel que soit l'état de charge du moyen de stockage.

6.  Système selon l'une des revendications 1 à 5, **caractérisé en ce que** les moyens de mesure (5) peuvent consister en un télémètre laser, un capteur de niveau optique ou encore un flotteur instrumenté.

7.  Procédé de détermination du taux de charge d'un moyen de stockage d'énergie par chaleur latente, ledit moyen de stockage comprenant un réservoir partiellement rempli d'un matériau à changement de phase dont le changement de phase s'accompagne d'une variation volumique avec un échangeur thermique noyé dans ledit matériau, ce moyen de stockage étant dans un état complètement déchargé lorsque le matériau à changement de phase est sensiblement totalement dans un premier état et dans un état complètement chargé, lorsque le matériau à changement de phase est sensiblement totalement dans un deuxième état, **caractérisé en ce que** le procédé comprend les étapes suivantes :

    (a) remplir le réservoir (1) du moyen de stockage avec un fluide de mesure (4),
    (b) réaliser une décharge complète du moyen de stockage,

(c) mesurer la hauteur du fluide dans le réservoir lorsque le moyen de stockage est dans cet état complètement déchargé,

(d) mesurer la hauteur du fluide dans le réservoir à un moment déterminé du fonctionnement du moyen de stockage, et

(e) calculer le taux de charge audit moment déterminé en fonction de la différence entre les hauteurs du fluide mesurées aux étapes (c) et (d).

8. Procédé selon la revendication 7, **caractérisé en ce que** le matériau à changement de phase est sous forme solide dans ledit premier état et dans ledit deuxième état.

9. Procédé selon la revendication 7, dans lequel le matériau à changement de phase est sous forme solide dans ledit premier état ou dans ledit deuxième état et sous forme liquide dans ledit premier état ou dans ledit deuxième état, **caractérisé en ce que** le fluide de mesure utilisé est compatible et non miscible avec le matériau à changement de phase.

10. Procédé selon la revendication 9, **caractérisé en ce que** la densité du fluide de mesure est inférieure à celle du matériau à changement de phase sous forme liquide.

11. Procédé selon l'une des revendications 6 à 8, **caractérisé en ce que** le volume du fluide de mesure est choisi de telle sorte que le fluide de mesure présente une surface libre plane, quel que soit l'état de charge du moyen de stockage.

12. Procédé selon l'une des revendications 9 à 11, caractérisé en qu'avant l'étape (a), le réservoir (1) est rempli par le matériau à changement de phase, en phase liquide.

## Patentansprüche

1. System zum Bestimmen des Ladefaktors eines Latentwärme-Energiespeichermittels, wobei das Speichermittel einen Behälter umfasst, der teilweise mit einem Phasenwechselmaterial gefüllt ist, dessen Phasenwechsel von einer Volumenvariation mit einem Wärmetauscher, der in dem Material eingelassen ist, begleitet ist, wobei dieses Speichermittel in einem vollständig entladenen Zustand ist, wenn das Phasenwechselmaterial im Wesentlichen vollständig in einem ersten Zustand ist, und in einem vollständig geladenen Zustand ist, wenn das Phasenwechselmaterial im Wesentlichen vollständig in einem zweiten Zustand ist, umfassend:

   - ein Messfluid (4), das dazu bestimmt ist, in den Behälter (1) des Speichermittels gegossen zu werden, und **dadurch gekennzeichnet, dass** das System Folgendes umfasst:
   - Messmittel (5) der Höhe des Messfluids in dem Behälter, und
   - Mittel zum Berechnen des Ladefaktors des Speichermittels in einem bestimmten Augenblick seines Betriebs in Abhängigkeit von dem Unterschied zwischen der Höhe des Fluids, das in dem Behälter anwesend ist, wenn das Speichermittel vollständig entladen ist, und der Höhe des Fluids in dem bestimmten Augenblick.

2. System nach Anspruch 1, **dadurch gekennzeichnet, dass** das Phasenwechselmaterial in dem ersten Zustand und in dem zweiten Zustand in fester Form vorliegt.

3. System nach Anspruch 1, wobei das Phasenwechselmaterial in dem ersten Zustand oder dem zweiten Zustand in fester Form vorliegt und in dem ersten Zustand oder dem zweiten Zustand in flüssiger Form vorliegt, **dadurch gekennzeichnet, dass** das Messfluid mit dem Phasenwechselmaterial kompatibel und nicht mischbar ist.

4. System nach Anspruch 3, **dadurch gekennzeichnet, dass** das Messfluid eine Dichte umfasst, die niedriger ist als die des Phasenwechselmaterial in flüssiger Form.

5. System nach einem der Ansprüche 1 bis 4, **dadurch gekennzeichnet, dass** das Volumen des Messfluids derart ausgewählt ist, dass das Messfluid ungeachtet des Ladezustands des Speichermittels eine ebene freie Oberfläche (40) aufweist.

6. System nach einem der Ansprüche 1 bis 5, **dadurch gekennzeichnet, dass** die Messmittel (5) aus einem Lasertelemeter, einem optischen Füllstandsgeber oder auch einem instrumentierten Schwimmer bestehen kann.

7. Verfahren zum Bestimmen des Ladefaktors eines Latentwärme-Energiespeichermittels, wobei das Speichermittel einen Behälter umfasst, der teilweise mit einem Phasenwechselmaterial gefüllt ist, dessen Phasenwechsel von einer Volumenvariation mit einem Wärmetauscher, der in dem Material eingelassen ist, begleitet ist, wobei dieses Speichermittel in einem vollständig entladenen Zustand ist, wenn das Phasenwechselmaterial im Wesentlichen vollständig in einem ersten Zustand ist, und in einem vollständig geladenen Zustand ist, wenn das Phasenwechselmaterial im Wesentlichen vollständig in einem zweiten Zustand ist, **dadurch gekennzeichnet, dass** das Verfahren die folgenden Schritte umfasst:

   (a) Füllen des Behälters (1) des Speichermittels mit einem Messfluid (4),
   (b) Ausführen eines vollständigen Entladens des Speichermittels,
   (c) Messen der Höhe des Fluids in dem Behälter, wenn das Speichermittel in diesem vollständig entladenen Zustand ist,
   (d) Messen der Höhe des Fluids in dem Behälter in einem bestimmten Augenblick des Betriebs des Speichermittels, und
   (e) Berechnen des Ladefaktors in dem bestimmten Augenblick in Abhängigkeit von dem Unterschied zwischen den Höhen des Fluids, die bei den Schritten (c) und (d) gemessen wurden.

8. Verfahren nach Anspruch 7, **dadurch gekennzeichnet, dass** das Phasenwechselmaterial in dem ersten Zustand und dem zweiten Zustand in fester Form vorliegt.

9. Verfahren nach Anspruch 7, wobei das Phasenwechselmaterial in dem ersten Zustand oder in dem zweiten Zustand in fester Form vorliegt und in dem ersten Zustand oder in dem zweiten Zustand in flüssiger Form vorliegt, **dadurch gekennzeichnet, dass** das verwendete Messfluid mit dem Phasenwechselmaterial kompatibel und nicht mischbar ist.

10. Verfahren nach Anspruch 9, **dadurch gekennzeichnet, dass** die Dichte des Messfluids niedriger ist als die des Phasenwechselmaterials in flüssiger Form.

11. Verfahren nach einem der Ansprüche 6 bis 8, **dadurch gekennzeichnet, dass** das Volumen des Messfluids derart ausgewählt ist, dass das Messfluid ungeachtet des Ladezustands des Speichermittels eine ebene freie Oberfläche aufweist.

12. Verfahren nach einem der Ansprüche 9 bis 11, **dadurch gekennzeichnet, dass** der Behälter (1) vor dem Schritt (a) mit dem Phasenwechselmaterial in flüssiger Phase gefüllt wird.

## Claims

1. System for determining the charge rate of a latent heat energy storage means, said storage means comprising a tank partially filled with a phase change material, whose phase change is accompanied by a volume variation with a heat exchanger embedded in said material, this storage means being in a fully discharged state when the phase change material is substantially totally in a first state and in a fully charged state, when the phase change material is substantially totally in a second state, comprising:

   - a measuring fluid (4) intended to be poured in the tank (1) of the storage means, and **characterised in that** the system comprises
   - means for measuring (5) the height of the measuring fluid in the tank, and
   - means for calculating the charge rate of the storage means at a determined moment of its functioning, according to the difference between the height of the fluid present in the tank when the storage means is fully discharged and the height of the fluid at said determined moment.

2. System according to claim 1, **characterised in that** the phase change material is in solid form in said first state and in said second state.

3. System according to claim 1, wherein the phase change material is in solid form in said first state or in said second state and in liquid form in said first state or in said second state, **characterised in that** the measuring fluid is compatible and non-miscible with the phase change material.

**4.** System according to claim 3, **characterised in that** the measuring fluid comprises a density less than that of the phase change material in liquid form.

**5.** System according to one of claims 1 to 4, **characterised in that** the volume of said measuring fluid is selected such that the measuring fluid presents a flat free surface (40) whatever the charge state of the storage means.

**6.** System according to one of claims 1 to 5, **characterised in that** the measuring means (5) can consist in a laser telemeter, an optical level sensor or also an instrumented float.

**7.** Method for determining the charge rate of a latent heat energy storage means, said storage means comprising a tank partially filled with a phase change material, whose phase change is accompanied by a volume variation with a heat exchanger embedded in said material, this storage means being in a fully discharged state when the phase change material is substantially totally in a first state and in a fully charged state, when the phase change material is substantially totally in a second state, **characterised in that** the method comprises the following steps:

(a) filling the tank (1) of the storage means with a measuring fluid (4),
(b) carrying out a complete discharge of the storage means,
(c) measuring the height of the fluid in the tank when the storage means is in this fully discharged state,
(d) measuring the height of the fluid in the tank at a determined moment of the functioning of the storage means, and
(e) calculating the charge rate at said determined moment according to the difference between the heights of the fluid measured in steps (c) and (d).

**8.** Method according to claim 7, **characterised in that** the phase change material is in solid form in said first state and in said second state.

**9.** Method according to claim 7, wherein the phase change material is in solid form in said first state or in said second state and in liquid form in said first state or in said second state, **characterised in that** the measuring fluid is compatible and non-miscible with the phase change material.

**10.** Method according to claim 9, **characterised in that** the density of the measuring fluid is less than that of the phase change material in liquid form.

**11.** Method according to one of claims 6 to 8, **characterised in that** the volume of the measuring fluid is selected such that the measuring fluid has a flat free surface, whatever the charge state of the storage means.

**12.** Method according to one of claims 9 to 11, **characterised in that** before step (a), the tank (1) is filled with the phase change material, in liquid phase.

**Fig.1**

**Fig.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012156343 A

- CH 648412

**Littérature non-brevet citée dans la description**

- **DR. ANDREAS DONATH ; PROF. MONIKA BAU-ER.** Entwicklung eines Messverfahrens zur Bestimmung des thermischen Beladungsgrades von PCM-Paraffin-Speichem. Brandenburgische Technische Universität Cottbus, Août 2008

- **GERALD STEINMAURER ; MICHAEL KRUPA ; PATRICK KEFER.** Development of sensors for measuring the enthalpy of PCM storage systems. *Energy Procedia,* 2014, vol. 48, 440-446
- Eperimental study on the direct/indirect contact energy storage container in mobilized thermal energy system (M-TES). *Applied Energy,* 2014, vol. 119, 181-189